# EUROPEAN PATENT SPECIFICATION

(11) **EP 3 894 686 B1**
(45) Date of publication and mention of the grant of the patent: **08.02.2023**
(21) Application number: 19829446.4
(22) Date of filing: 11.12.2019
(51) Int. Cl.: F02M 55/02, F02M 61/16, F02M 61/14, B29C 64/00

(54) **FUEL RAIL, FIXING BRACKET, METHOD FOR MANUFACTURING A FUEL RAIL AND METHOD FOR MANUFACTURING A FIXING BRACKET**
KRAFTSTOFFVERTEILERLEISTE, BEFESTIGUNGSHALTERUNG, VERFAHREN ZUR HERSTELLUNG EINER KRAFTSTOFFVERTEILERLEISTE UND VERFAHREN ZUR HERSTELLUNG EINER BEFESTIGUNGSHALTERUNG
RAMPE DE CARBURANT, SUPPORT DE FIXATION, PROCÉDÉ DE FABRICATION D'UNE RAMPE DE CARBURANT ET PROCÉDÉ DE FABRICATION D'UN SUPPORT DE FIXATION

(30) Priority: 13.12.2018 EP 18212282
(43) Date of publication of application: 20.10.2021
(73) Proprietor: Vitesco Technologies GmbH, 93055 Regensburg (DE)
(72) Inventor: SERRA, Giandomenico, 81737 München (DE); PUCCINI, Andrea, 81737 München (DE); PASQUALI, Marco, 81737 München (DE)
(74) Representative: Vitesco Technologies
(86) International application number: PCT/EP2019/084736
(87) International publication number: WO 2020/120615

(56) References cited:
- EP-A1- 2 851 552
- EP-A2- 1 457 663
- EP-A2- 2 466 111
- DE-A1-102016 209 423
- GB-A- 2 537 642
- KR-A- 20110 133 908

## Description

### Technical Field

According to a first aspect the invention relates to a fuel rail, comprising a main gallery and in particular at least one fixing bracket and in particular at least one injector cup.

According to a second aspect the invention relates to a fixing bracket, in particular for a fuel rail, wherein the fixing bracket comprises a body, which in particular has a cylindrical shape, said body extending around a hollow cavity and along a longitudinal direction of the hollow cavity.

According to a third aspect the invention relates to a fuel rail, comprising a main gallery and at least one fixing bracket.

According to a fourth aspect the invention relates to a method for manufacturing a fuel rail and fixing bracket.

### Background Art

On injection fuel systems, in particular on direct injection fuel systems, it is standard practice to manufacture the fuel rail by brazing sub-components, such as a main gallery, fixing brackets and injector cups. These sub-components are manufactured with traditional technologies such as machining, stamping, deep drawing etc. As a consequence of these traditional technologies used, the internal structure of the metallic parts are standard with constant material density.

On manufacturing injection fuel systems it is intended to decrease the overall weight of a fuel rail and even of its components. In the past, on using the traditional technologies, at first the components were manufactured as high weight components, i.e. components having a compact structure and a uniform high density. Thereafter the components have been mounted or fixed to each other by for example brazing or forging of standard shaped components. However, as a disadvantage, there has been no other possibility to reduce locally the weight than removing useless material by means of machining, but this practise is too expensive because it is an additional process step. As an additional limitation the parts have constant density. DE 10 2016 209423 and KR 2011 0133908 A disclose respectively a fuel rail and a fixing bracket with sections of different density.

### Summary of Invention

Regarding the first aspect of the invention it is an object of the invention to provide an improved fuel rail. In particular, it is an object of the invention that by such improvement the known disadvantageous limitations are removed as far as possible. In particular, it is an object to decrease the weight of the fuel rail without reducing the structural robustness where the component is over-engineered.

Regarding the second aspect it is an object of the invention to provide an improved fixing bracket, in particular for a fuel rail. In particular it is an object that by such improvement the known disadvantageous limitations are removed as far as possible. Further, in particular it is an object to decrease the weight of the fixing bracket without reducing its structural robustness where the fixing bracket is over-engineered.

Regarding the third aspect it is an object of the invention to provide an improved fuel rail which includes at least one fixing bracket. Preferably the fixing bracket is manufactured separately and fixed to the fuel rail thereafter.

According to the fourth aspect it is an object of the invention to provide an improved method for manufacturing a fuel rail, and an improved method for manufacturing a fixing bracket.

According to the first aspect, in order to solve the object, the invention suggests that the fuel rail is a one-piece fuel rail which comprises at least one first fuel rail section having a first average density and at least one second fuel rail section having a second average density, wherein the second average density is smaller than the first average density. The first average density preferably has a meaning of the quotient of the total weight and the total volume of the first fuel rail section. The term second average density preferably has a meaning of the quotient of the total weight and the total volume of the second fuel rail section. Accordingly, the invention enables to reduce the density (i.e. the specific weight) of the fuel rail especially in sections where the fuel rail is over-engineered and where accordingly reducing the material density is possible without going below a required amount of structural robustness. Preferably, the fuel rail may be planned and constructed by using software in order to determine an appropriate section or appropriate sections where it is possible to reduce the average material density compared to other sections of the fuel rail having a constant and in particular maximum material density with regard to the used material.

There are many possibilities for performing preferred modifications and embodiments:
It is preferred that the fuel rail, in particular as a whole, is made by additive manufacturing. As known to a skilled person, the term additive manufacturing refers to a number of techniques for producing components by adding material instead of removing material by for example machining, drilling or other processes according to the traditional techniques. Preferably, the fuel rail according to the invention may be formed as a whole by a three dimensional printing process. However, alternatively also other additive manufacturing processes can be used which are known to skilled persons. In summary, according to this aspect the design of the fuel rail is aimed to be realized by additive manufacturing technology.

Furthermore, it is preferred that the second fuel rail section is an internal section of the fuel rail, which is surrounded in part or completely by the first fuel rail section. Accordingly, the first fuel rail section could be denoted as an external zone and the second fuel rail section could be denoted as an internal zone.

According to the invention it is provided that the at least one fixing bracket of the one-piece fuel rail comprises a body, which in particular has a cylindrical shape, wherein the body extends around a hollow cavity and along a longitudinal direction of the hollow cavity and wherein the body comprises the at least one first fuel rail section and the at least one second fuel rail section. In more detail, the first fuel rail section comprises a first end wall, a second end wall, a first lateral wall and a second lateral wall, wherein the first end wall and the second end wall are spaced from each other with regard to the longitudinal direction, wherein the first lateral wall extends outside of the second lateral wall and wherein the first end wall, the second end wall, the first lateral wall and the second lateral wall together encase the second fuel rail section. By such design it is advantageously considered that the second fuel rail section in the internal zone has to withstand smaller strains compared to the first fuel rail section in the external zone of the fixing bracket so that it is possible to reduce the mechanical resistance in the internal zone without disadvantages but on advantageously reducing the total weight. The first end wall and the second end wall may be upper and lower zones having standard material density, respectively. These zones can be thicker or thinner depending on the requirements of a respective application. Also for example an outer diameter zone (i.e. the first lateral wall) and an inner diameter zone (i.e. the second lateral wall) which preferably have a standard material density can be thicker or thinner depending on the individual requirements of an application.

It is possible that the first fuel rail section and the second fuel rail section are made of the same material, like for example of metal, plastic or other material which is known to a skilled person for additive manufacturing. There is even the possibility that the complete fuel rail is made of the same, i.e. of a uniform material. It is also preferred that at least the at least one first fuel rail section and the at least one second fuel rail section or even the complete fuel rail is made by only one continuous additive manufacturing process. As an advantageous effect, differing from the traditional technologies, according to this aspect of the invention it is not necessary to first manufacture separate components and thereafter to combine said components. Instead, according to the invention it is possible to manufacture sections of the fuel rail having different density together, i.e. as a one-piece design, on using an additive manufacturing technology. The invention enables that the first fuel rail section has a first mechanical resistance and the second fuel rail section has a second mechanical resistance wherein the first mechanical resistance is bigger than the second mechanical resistance, and/or that the second fuel rail section is formed as a lattice and the first fuel rail section has a compact structure and/or an uniform density. The term uniform density means that the density is the same in all regions of the first fuel rail section. Further, it is possible that the fuel rail comprises two or more second fuel rail sections, wherein each of said second fuel rail sections has the second average density which is smaller than the first average density.

It is preferred that in the second fuel section the lattice has a uniform lattice structure or a variable lattice structure. Regarding this aspect the invention pertains to a design of the fuel rail comprising a standard structure of material mixed with an, preferably internal, lattice structure in order to decrease the weight of the lattice regions and accordingly the total weight of the fuel rail without reducing the structural robustness below a required amount.

According to the invention the fuel rail comprises at least one third fuel rail section having a third average density wherein the third average density is smaller than the second average density. The second fuel section has a first lattice structure and the third fuel section has a second lattice structure wherein the first lattice structure and the second lattice structure are different from each other, in particular are different kinds of structure. Different kinds of structure for example may be regular lattices or irregular lattices or may be lattices which differ from each other regarding other criteria. Such differences enable to adapt the average density and the mechanical properties to the local requirements in the respective sections of the fuel rail.

As explained before, preferably the lattice structure may be an internal part of the fuel rail. The shape and the density of the lattice structure can be different depending on the mechanical requirements of the application, by means of using lattice structures in particular in the low stress zones. The shape and the density of the lattice structure(s) can be different depending on the weight requirements of the application, being the weight severely decreased by means of the use of lattice structures. The upper and lower zones of the lattice structure can be also variable, or more than one different kind of structure can be used in the same component. It is possible that one or more of the zones which have the standard material density are not present. Further, the thickness of the zones with standard material density can be also variable.

According to the second aspect in order to solve the underlying object the invention suggests that the body is a one-piece body which comprises at least one first body section having a first average density and at least one second body section having a second average density, wherein the second average density is smaller than the first average density. Regarding technical effects and advantages reference is made to the above description. A fixing bracket in accordance to the second aspect may be manufactured at first as a separate element and thereafter may be fixed to another component, like for example to a main gallery of a fuel rail which in particular has been manufactured by traditional technologies.

There are many possibilities for performing preferred modifications and embodiments:
According to the invention the fixing bracket is made by additive manufacturing. Regarding possible embodiments, effects and advantages, again reference is made to the above description.

According to the invention it is provided that the first body section comprises a first end wall, a second end wall, a first lateral wall and a second lateral wall, wherein the first end wall and the second end wall are spaced from each other with regard to the longitudinal direction, wherein the first lateral wall extends outside of the second lateral wall and wherein the first end wall, the second end wall, the first lateral wall and the second lateral wall together encase the second body section. It is possible that the first body section has a first mechanical resistance and the second body section has a second mechanical resistance wherein the first mechanical resistance is bigger than the second mechanical resistance and/or that the second body section is formed as a lattice and the first body section has a compact structure and/or an uniform density. Again, the term uniform density means that the density is the same in all regions of the first body section.

Regarding the third aspect of the invention in order to solve the underlying object the invention suggests that the fixing bracket is a fixing bracket as described before which has been manufactured as a separate fixing bracket, wherein the fixing bracket is fixed thereafter, in particular by brazing, to the main gallery of the fuel rail. Accordingly, the invention advantageously enables to combine traditional techniques and techniques according to the present invention on manufacturing a fuel rail.

Regarding the fourth aspect of the invention in order to solve the underlying object the invention suggests that the fuel rail, in particular as a whole, is made by additive manufacturing and that the fuel rail is a fuel rail according to the first aspect of the present invention, and the fixing bracket, in particular as a whole, is made by additive manufacturing and that the fixing bracket is a fixing bracket according to the second aspect of the invention.

### Brief Description of Drawings

The invention will now be described by way of example with reference to the accompanying drawings. These are as follows:
- Fig. 1: is a schematic perspective view of a preferred embodiment of a fuel rail in accordance to an aspect of the present invention;
- Fig. 2: is a schematic sectional view according to section plane II - II in figure 1;
- Fig. 3: is a top view of a section of the fuel rail in viewing direction III of figure 1;
- Fig. 4: is a schematic perspective view of a preferred embodiment of a fixing bracket according to an aspect of the present invention;
- Fig. 5: schematically depicts two halves of the fixing bracket shown by figure 4 after cutting the fixing bracket for illustration purposes and including a first exemplary kind of lattice;
- Fig. 6: is a sectional view of a half of a fixing bracket similar to the fixing bracket of figure 4, however including a second exemplary kind of lattice;

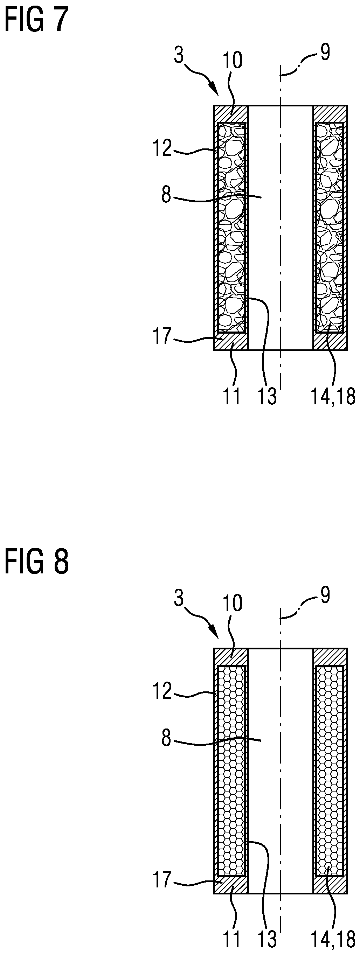

- Fig. 7: is a sectional view of a half of a fixing bracket similar to the fixing bracket of figure 4, however including a third exemplary kind of lattice;
- Fig. 8: is a sectional view of a half of a fixing bracket similar to the fixing bracket of figure 4, however including a fourth exemplary kind of lattice;

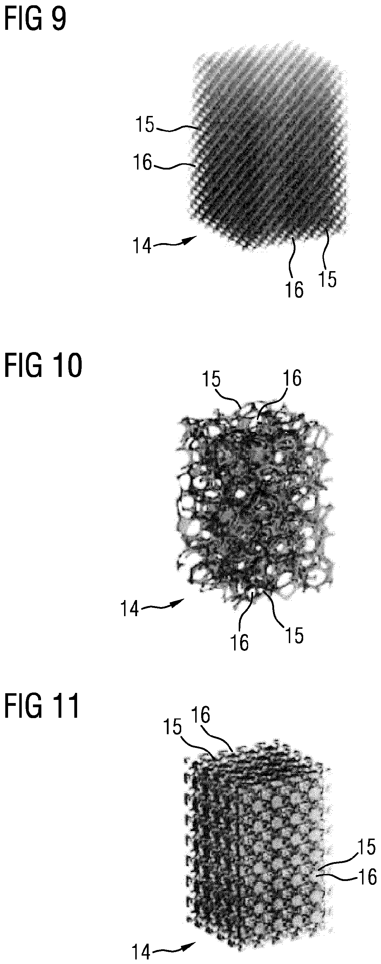

- Fig. 9: is a separated schematic view of a further exemplary kind of lattice as preferred by the invention;
- Fig. 10: is a separated schematic view of a still further exemplary kind of lattice as preferred by the invention; and
- Fig. 11: is a separated schematic view of a still further exemplary kind of lattice as preferred by the invention.

### Description of Embodiments

In the figures some corresponding or similar elements appearing in different illustrations are identified by the same reference numbers.

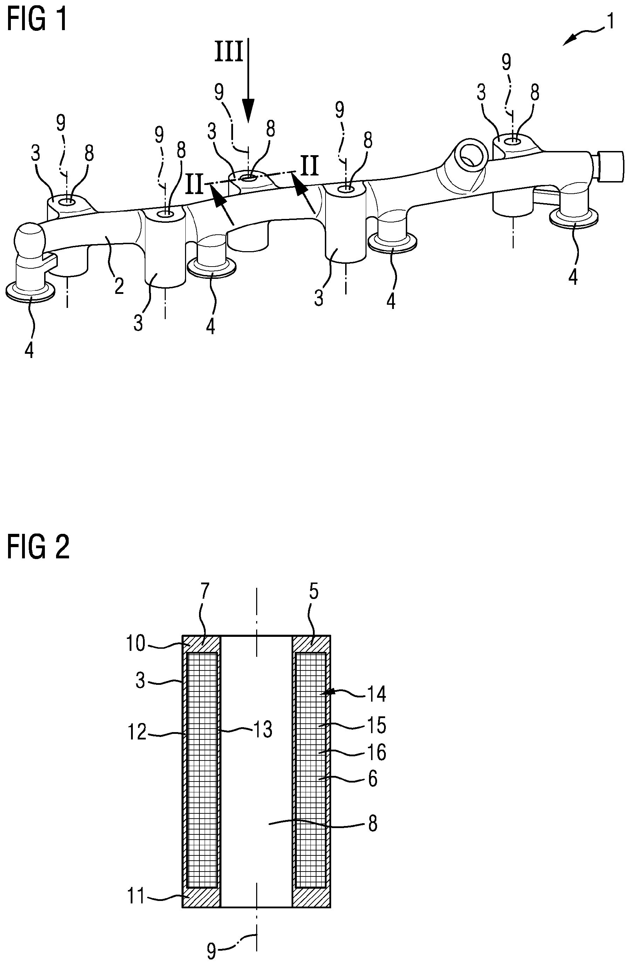

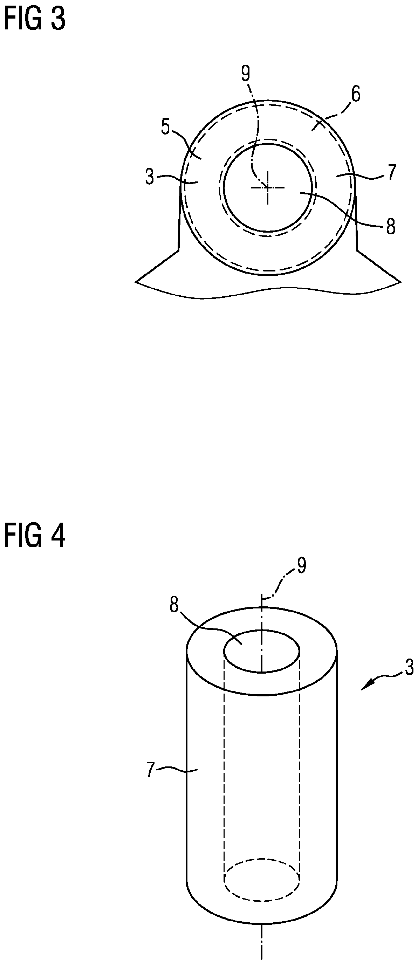

With reference to figures 1 - 3 it is described by way of example a preferred embodiment of a fuel rail 1 according to an aspect of the present invention. The fuel rail 1 comprises a main gallery 2, a number of fixing brackets 3 and also a number of injector cups 4. In the shown example the fuel rail 1 is a one-piece fuel rail 1 manufactured as a whole by additive manufacturing. One of its fixing brackets 3 is also shown by figures 2 and 3. Accordingly, at this fixing bracket 3 the fuel rail 1 comprises a first fuel rail section 5 having a first average density and a second fuel rail section 6 having a second average density, wherein the first average density is bigger than the second average density. As shown by figure 2 the second fuel rail section 6 is an internal section of the fuel rail 1 which in the example is completely surrounded by the first fuel rail section 5.

In more detail, the fixing bracket 3 shown by figures 2 and 3 comprises a body 7 which extends around a hollow cavity 8 and along a longitudinal direction 9 of the hollow cavity 8, wherein the body 7 comprises the mentioned first fuel rail section 5 and the mentioned second fuel rail section 6. In the example, the first fuel rail section 5 comprises a first end wall 10, a second end wall 11, a first lateral wall 12 and a second lateral wall 13. The first end wall 10 and the second end wall 11 are spaced from each other along the longitudinal direction 9. The first lateral wall 12 extends outside of the second lateral wall 13. The second lateral wall 13 is a cylindrical wall surrounding the hollow cavity 8. Also the second fuel rail section 6 has a cylindrical shape. In the example, the first end wall 10, the second end wall 11, the first lateral wall 12 and the second lateral wall 13 together completely encase the second fuel rail section 6. Accordingly, the first fuel rail section 5 could be denoted as an external zone and the second fuel rail section 6 could be denoted as an internal zone.

In the described example the first fuel rail section 5 has a compact structure without visible pores or the like and for this reason has a uniform density, which means that the density is the same in all regions of the first fuel rail section 5. In the example, the value of the first average density of the first fuel rail section 5 corresponds to the value of said uniform density. The second fuel rail section 6 is formed as a lattice 14 made of the same material like the first fuel rail section 5. However, differing from the first fuel rail section 5, in the second fuel rail section 6 between segments 15 of the lattice 14 there are holes 16, and accordingly the second fuel rail section 6 has a second average density which is smaller compared to the first average density of the first fuel rail section 5. The holes 16 may include a gas like air for example, and hence have a density much smaller compared to the density of the segments 15 of the lattice 14. Accordingly, because the segments 15 of the lattice 14 are made of the same material like the first fuel rail section 5, the second average density of the second fuel rail section 6 is smaller compared to the first average density of the first fuel rail section 5. In the example, the first fuel rail section 5 has a first mechanical resistance and the second fuel rail section 6 has a second mechanical resistance wherein the first mechanical resistance is bigger than the second mechanical resistance.

In the example, the fuel rail 1 comprises five fixing brackets 3 wherein each of the fixing brackets 3 has a first fuel rail section 5 and a second fuel rail section 6 as described before. The fixing brackets 3 may be used for fixing the fuel rail 1 at for example an internal combustion engine on using for example screws or the like which can be put through the hollow cavities 8, respectively. These screws are not shown by figures 1 - 3.

According to the above description, with reference to figure 1 an additive manufactured fuel rail 1 is shown. As explained, in figure 2 focussing on an exemplary detail of the fuel rail 1 one of its fixing brackets 3 is sectioned for illustrative purposes. Regarding the fixing bracket 3 several kinds of lattice structures can be obtained by additive manufacturing technologies, each one with different density and mechanical resistance, depending on the requirements of a respective application. This concept exemplarily is shown in the figures for the fixing bracket 3 but can be applied to any zone of the fuel rail.

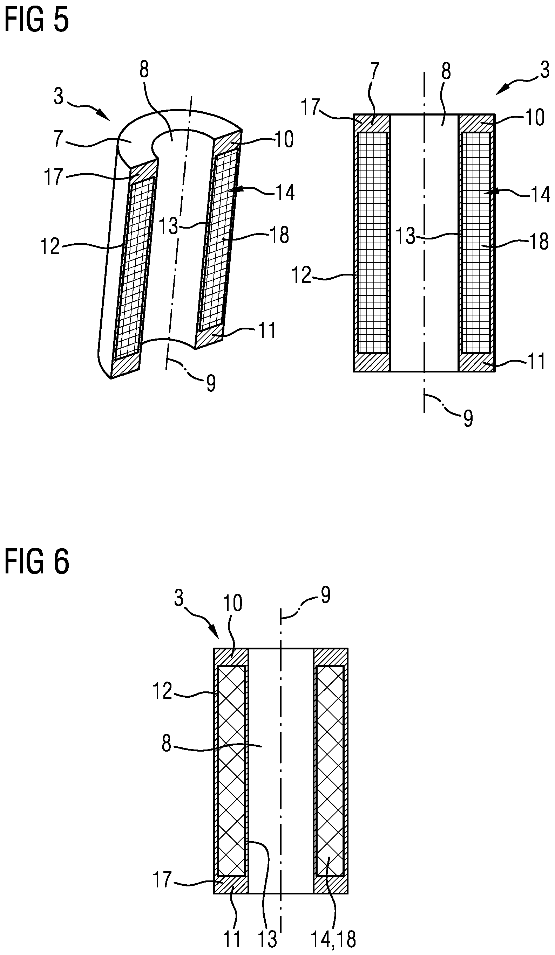

With reference to figures 4 and 5 it is described by way of example a preferred embodiment of a separate fixing bracket 3 according to another aspect of the present invention. As shown by figure 4, the fixing bracket 3 is first manufactured as a single part and thereafter may be fixed to another component, for example to a fuel rail 1, by any appropriate fixing technique, like for example by brazing or by any other technique. The fixing bracket 3 may have a cylindrical shape as depicted by figure 4 or, as it is clear to a skilled person, may have any other desired shape which is appropriate or required for fixing the fixing bracket 3 at a desired other component.

In the shown example the fixing bracket 3 comprises a body 7 which has a cylindrical shape. The body 7 extends around a hollow cavity 8 along a longitudinal direction 9 of the hollow cavity 8. The body 7 is a one-piece body 7 which comprises a first body section 17 having a first average density and a second body section 18 having a second average density, wherein the second average density is smaller compared to the first average density. In the example, the fixing bracket 3 is made as a separate one-piece bracket as a whole by additive manufacturing.

The first body section 17 comprises a first end wall 10, a second end wall 11, a first lateral wall 12 and a second lateral wall 13 wherein, again, the same reference numbers are used like in figures 1 - 3. The first end wall 10 and the second end wall 11 are spaced from each other with regard to the longitudinal direction 9. The first lateral wall 12 extends outside of the second lateral wall 13. The first end wall 10, the second end wall 11, the first lateral wall 12 and the second lateral wall 13 together completely encase the second body section 18. Accordingly, the first body section 17 could be denoted as an external zone and the second body section 18 could be denoted as an internal zone. In the example, the second body section 18 is formed as a lattice 14. Like in the example of figures 1 - 3, the lattice 14 is sandwiched between the first and second lateral walls 12, 13 and has a cylindrical shape. The first body section 17 has a compact structure and a uniform density.

All disclosed features are (for its own, but also in combination) relevant for the invention. The features of the dependent claims characterize also independent inventive improvements of the prior art, in particular for filing divisional applications on a basis of these claims.

### Reference Signs List

- 1: fuel rail
- 2: main gallery
- 3: fixing bracket
- 4: injector cup
- 5: first fuel rail section
- 6: second fuel rail section
- 7: body
- 8: cavity
- 9: longitudinal direction
- 10: first end wall
- 11: second end wall
- 12: first lateral wall
- 13: second lateral wall
- 14: lattice
- 15: segment of lattice
- 16: hole
- 17: first body section
- 18: second body section

## Claims

1. Fuel rail (1), comprising a main gallery (2) and in particular at least one fixing bracket (3) and in particular at least one injector cup (4), wherein the fuel rail (1) is a one-piece fuel rail (1) which comprises at least one first fuel rail section (5) having a first average density and at least one second fuel rail section (6) having a second average density, wherein the second average density is smaller than the first average density, **characterized in that** the at least one fixing bracket of the one-piece fuel rail comprises a body (7), which in particular has a cylindrical shape, wherein the body extends around a hollow cavity (8) and along a longitudinal direction (9) of the hollow cavity (8) and wherein the body (7) comprises the at least one first fuel rail section (5) and the at least one second fuel rail section (6), and **in that** the first fuel rail section (5) comprises a first end wall (10), a second end wall (11), a first lateral wall (12) and a second lateral wall (13), wherein the first end wall (10) and the second end wall (11) are spaced from each other with regard to the longitudinal direction (9), wherein the first lateral wall (12) extends outside of the second lateral wall (13) and wherein the first end wall (10), the second end wall (11), the first lateral wall (12) and the second lateral wall (13) together encase the second fuel rail section (6), and **in that** the fuel rail (1) comprises at least one third fuel rail section having a third average density wherein the third average density is smaller than the second average density, and **in that** the second fuel section (6) has a first lattice structure and the third fuel section has a second lattice structure wherein the first lattice structure and the second lattice structure are different from each other, in particular are different kinds of structure.

2. Fuel rail (1) according to claim 1, **characterized in that** the fuel rail (1), in particular as a whole, is made by additive manufacturing.

3. Fuel rail (1) according to any of the preceding claims, **characterized in that** the second fuel rail section (6) is an internal section of the fuel rail (1), which is surrounded in part or completely by the first fuel rail section (5).

4. Fuel rail (1) according to any of the preceding claims, **characterized in that** the first fuel rail section (5) has a first mechanical resistance and the second fuel rail section (6) has a second mechanical resistance wherein the first mechanical resistance is bigger than the second mechanical resistance, and/or that the second fuel rail section (6) is formed as a lattice (14) and the first fuel rail section (5) has a compact structure and/or an uniform density.

5. Fuel rail (1) according to any of the preceding claims, **characterized in that** in the second fuel section (6) the lattice (14) has a uniform lattice structure or a variable lattice structure.

6. Fixing bracket (3), in particular for a fuel rail (1), wherein the fixing bracket (3) comprises a body (7), which in particular has a cylindrical shape, said body (7) extending around a hollow cavity (8) and along a longitudinal direction (9) of the hollow cavity (8), wherein the body (7) is a one-piece body (7) which comprises at least one first body section (17) having a first average density and at least one second body section (18) having a second average density, wherein the second average density is smaller than the first average density, **characterized in that** the fixing bracket (3), in particular as a whole, is made by additive manufacturing, and **characterized in that** the first body section (17) comprises a first end wall (10), a second end wall (11), a first lateral wall (12) and a second lateral wall (13), wherein the first end wall (10) and the second end wall (11) are spaced from each other with regard to the longitudinal direction (9), wherein the first lateral wall (12) extends outside of the second lateral wall (13) and wherein the first end wall (10), the second end wall (11), the first lateral wall (12) and the second lateral wall (13) together encase the second body section (18).

7. Fixing bracket (3) according to claim 6, **characterized in that** the first body section (17) has a first mechanical resistance and the second body section (18) has a second mechanical resistance wherein the first mechanical resistance is bigger than the second mechanical resistance and/or that the second body section (18) is formed as a lattice (14) and the first body section (17) has a compact structure and/or an uniform density.

8. Fuel rail, comprising a main gallery and at least one fixing bracket (3), **characterized in that** the fixing bracket is a fixing bracket (3) according to any of claims 6 and 7, wherein the fixing bracket (3) is fixed, in particular by brazing, to the main gallery of the fuel rail.

9. Method for manufacturing a fuel rail (1), **characterized in that** the fuel rail (1), in particular as a whole, is made by additive manufacturing and that the fuel rail (1) is a fuel rail (1) according to any of the claims 1 - 8, and **in that** the fixing bracket (3), in particular as a whole, is made by additive manufacturing and that the fixing bracket (3) is a fixing bracket (3) according to any of the claims 6 and 7.

## Patentansprüche

1. Kraftstoffverteilerleitung (1), umfassend eine Hauptgalerie (2) und insbesondere mindestens eine Fixierungshalterung (3) und insbesondere mindestens eine Einspritzventilaufnahme (4), wobei die Kraftstoffverteilerleitung (1) eine einstückige Kraftstoffverteilerleitung (1) ist, die mindestens einen ersten Kraftstoffverteilerleitungsbereich (5) mit einer ersten durchschnittlichen Dichte und mindestens einen zweiten Kraftstoffverteilerleitungsbereich (6) mit einer zweiten durchschnittlichen Dichte umfasst, wobei die zweite durchschnittliche Dichte weniger als die erste durchschnittliche Dichte beträgt, **dadurch gekennzeichnet, dass** die mindestens eine Fixierungshalterung der einstückigen Kraftstoffverteilerleitung einen Körper (7) umfasst, der insbesondere eine zylindrische Form aufweist, wobei sich der Körper um einen Hohlraum (8) und in einer Längsrichtung (9) des Hohlraums (8) erstreckt und wobei der Körper (7) den mindestens einen ersten Kraftstoffverteilerleitungsbereich (5) und den mindestens einen zweiten Kraftstoffverteilerleitungsbereich (6) umfasst, und dass der erste Kraftstoffverteilerleitungsbereich (5) eine erste Endwand (10), eine zweite Endwand (11), eine erste laterale Wand (12) und eine zweite laterale Wand (13) umfasst, wobei die erste Endwand (10) und die zweite Endwand (11) in der Längsrichtung (9) voneinander beabstandet sind, wobei sich die erste laterale Wand (12) außerhalb der zweiten lateralen Wand (13) erstreckt und wobei die erste Endwand (10), die zweite Endwand (11), die erste laterale Wand (12) und die zweite laterale Wand (13) zusammen den zweiten Kraftstoffverteilerleitungsbereich (6) umschließen, und dass die Kraftstoffverteilerleitung (1) mindestens einen dritten Kraftstoffverteilerleitungsbereich mit einer dritten durchschnittlichen Dichte umfasst, wobei die dritte durchschnittliche Dichte weniger als die zweite durchschnittliche Dichte beträgt, und dass der zweite Kraftstoffverteilerleitungsbereich (6) eine erste Gitterstruktur aufweist und der dritte Kraftstoffverteilerleitungsbereich eine zweite Gitterstruktur aufweist, wobei die erste Gitterstruktur und die zweite Gitterstruktur voneinander verschieden sind, insbesondere verschiedene Strukturarten sind.

2. Kraftstoffverteilerleitung (1) nach Anspruch 1, **dadurch gekennzeichnet, dass** die Kraftstoffverteilerleitung (1), insbesondere im Ganzen, durch additive Fertigung hergestellt wird.

3. Kraftstoffverteilerleitung (1) nach einem der vorhergehenden Ansprüche, **dadurch gekennzeichnet, dass** der zweite Kraftstoffverteilerleitungsbereich (6) ein innerer Bereich der Kraftstoffverteilerleitung (1), der zum Teil oder komplett von dem ersten Kraftstoffverteilerleitungsbereich (5) umgeben wird, ist.

4. Kraftstoffverteilerleitung (1) nach einem der vorhergehenden Ansprüche, **dadurch gekennzeichnet, dass** der erste Kraftstoffverteilerleitungsbereich (5) einen ersten mechanischen Widerstand aufweist und der zweite Kraftstoffverteilerleitungsbereich (6) einen zweiten mechanischen Widerstand aufweist, wobei der erste mechanische Widerstand größer als der zweite mechanische Widerstand ist, und/oder dass der zweite Kraftstoffverteilerleitungsbereich (6) als ein Gitter (14) ausgebildet wird und der erste Kraftstoffverteilerleitungsbereich (5) eine kompakte Struktur und/oder eine gleichmäßige Dichte aufweist.

5. Kraftstoffverteilerleitung (1) nach einem der vorhergehenden Ansprüche, **dadurch gekennzeichnet, dass** bei dem zweiten Kraftstoffverteilerleitungsbereich (6) das Gitter (14) eine gleichmäßige Gitterstruktur oder eine variable Gitterstruktur aufweist.

6. Fixierungshalterung (3), insbesondere für eine Kraftstoffverteilerleitung (1), wobei die Fixierungshalterung (3) einen Körper (7) umfasst, der insbesondere eine zylindrische Form aufweist, wobei sich der Körper (7) um einen Hohlraum (8) und entlang einer Längsrichtung (9) des Hohlraums (8) erstreckt, wobei der Körper (7) ein einstückiger Körper (7) ist, der mindestens einen ersten Körperbereich (17) mit einer ersten durchschnittlichen Dichte und mindestens einen zweiten Körperbereich (18) mit einer zweiten durchschnittlichen Dichte umfasst, wobei die zweite durchschnittliche Dichte weniger als die erste durchschnittliche Dichte beträgt, **dadurch gekennzeichnet, dass** die Fixierungshalterung (3), insbesondere im Ganzen, durch additive Fertigung hergestellt wird, und **dadurch gekennzeichnet, dass** der erste Körperbereich (17) eine erste Endwand (10), eine zweite Endwand (11), eine erste laterale Wand (12) und eine zweite laterale Wand (13) umfasst, wobei die erste Endwand (10) und die zweite Endwand (11) in der Längsrichtung (9) voneinander beabstandet sind, wobei sich die erste laterale Wand (12) außerhalb der zweiten lateralen Wand (13) erstreckt und wobei die erste Endwand (10), die zweite Endwand (11), die erste laterale Wand (12) und die zweite laterale Wand (13) zusammen den zweiten Körperbereich (18) umschließen.

7. Fixierungshalterung (3) nach Anspruch 6, **dadurch gekennzeichnet, dass** der erste Körperbereich (17) einen ersten mechanischen Widerstand aufweist und der zweite Körperbereich (18) einen zweiten mechanischen Widerstand aufweist, wobei der erste mechanische Widerstand größer als der zweite mechanische Widerstand ist, und/oder dass der zweite Körperbereich (18) als ein Gitter (14) ausgebildet wird und der erste Körperbereich (17) eine kompakte Struktur und/oder eine gleichmäßige Dichte aufweist.

8. Kraftstoffverteilerleitung, umfassend eine Hauptgalerie und mindestens eine Fixierungshalterung (3), **dadurch gekennzeichnet, dass** die Fixierungshalterung eine Fixierungshalterung (3) nach einem der Ansprüche 6 und 7 ist, wobei die Fixierungshalterung (3) an der Hauptgalerie der Kraftstoffverteilerleitung, insbesondere durch Löten, fixiert wird.

9. Verfahren zur Herstellung einer die Kraftstoffverteilerleitung (1), **dadurch gekennzeichnet, dass** die Kraftstoffverteilerleitung (1), insbesondere im Ganzen, durch additive Fertigung hergestellt wird und dass die Kraftstoffverteilerleitung (1) eine Kraftstoffverteilerleitung (1) nach einem der Ansprüche 1-8 ist und dass die Fixierungshalterung (3), insbesondere im Ganzen, durch additive Fertigung hergestellt wird und dass die Fixierungshalterung (3) eine Fixierungshalterung (3) nach einem der Ansprüche 6 und 7 ist.

## Revendications

1. Rampe de carburant (1), comprenant une galerie principale (2) et en particulier au moins un support de fixation (3) et en particulier au moins un raccord d'injecteur (4), la rampe de carburant (1) étant une rampe de carburant monobloc (1) qui comprend au moins une première section de rampe de carburant (5) ayant une première densité moyenne et au moins une deuxième section de rampe de carburant (6) ayant une deuxième densité moyenne, la deuxième densité moyenne étant inférieure à la première densité moyenne, **caractérisée en ce que** l'au moins un support de fixation de la rampe de carburant monobloc comprend un corps (7), qui en particulier a une configuration cylindrique, le corps s'étendant autour d'une cavité creuse (8) et le long d'une direction longitudinale (9) de la cavité creuse (8) et le corps (7) comprenant l'au moins une première section de rampe de carburant (5) et l'au moins une deuxième section de rampe de carburant (6), et **en ce que** la rampe de carburant (1) comprend au moins une troisième section de rampe de carburant ayant une troisième densité moyenne, la troisième densité moyenne étant inférieure à la deuxième densité moyenne, et **en ce que** la première section de rampe de carburant (5) comprend une première paroi d'extrémité (10), une deuxième paroi d'extrémité (11), une première paroi latérale (12) et une deuxième paroi latérale (13), la première paroi d'extrémité (10) et la deuxième paroi d'extrémité (11) étant espacées l'une de l'autre par rapport à la direction longitudinale (9), la première paroi latérale (12) s'étendant à l'extérieur de la deuxième paroi latérale (13) et la première paroi d'extrémité (10), la deuxième paroi d'extrémité (11), la première paroi latérale (12) et la troisième paroi latérale (13) enfermant ensemble la deuxième section de rampe de carburant (6), et **en ce que** la deuxième section de carburant (6) a une première structure maillée et la troisième section de carburant a une deuxième structure maillée, la première structure maillée et la deuxième structure maillée étant différentes l'une de l'autre, en particulier étant différentes sortes de structure.

2. Rampe de carburant (1) selon la revendication 1, **caractérisée en ce que** la rampe de carburant (1), en particulier en tant que tout, est produite par fabrication additive.

3. Rampe de carburant (1) selon l'une quelconque des revendications précédentes, **caractérisée en ce que** la deuxième section de rampe de carburant (6) est une section interne de la rampe de carburant (1), qui est entourée en partie ou complètement par la première section de rampe de carburant (5).

4. Rampe de carburant (1) selon l'une quelconque des revendications précédentes, **caractérisée en ce que** la première section de rampe de carburant (5) a une première résistance mécanique et la deuxième section de rampe de carburant (6) a une deuxième résistance mécanique, la première résistance mécanique étant supérieure à la deuxième résistance mécanique, et/ou la deuxième section de rampe de carburant (6) étant formée sous la forme d'un maillage (14) et la première section de rampe de carburant (5) ayant une structure compacte et/ou une densité uniforme.

5. Rampe de carburant (1) selon l'une quelconque des revendications précédentes, **caractérisée en ce que** dans la deuxième section de carburant (6) le maillage (14) a une structure maillée uniforme ou une structure maillée variable.

6. Support de fixation (3), en particulier pour une rampe de carburant (1), le support de fixation (3) comprenant un corps (7), qui en particulier a une configuration cylindrique, ledit corps (7) s'étendant autour d'une cavité creuse (8) et le long d'une direction longitudinale (9) de la cavité creuse (8), le corps (7) étant un corps monobloc (7) qui comprend au moins une première section de corps (17) ayant une première densité moyenne et au moins une deuxième section de corps (18) ayant une deuxième densité moyenne, la deuxième densité moyenne étant inférieure à la première densité moyenne, **caractérisé en ce que** le support de fixation (3), en particulier en tant que tout, est produit par fabrication additive, et **caractérisé en ce que** la première section de corps (17) comprend une première paroi d'extrémité (10), une deuxième paroi d'extrémité (11), une première paroi latérale (12) et une deuxième paroi latérale (13), la première paroi d'extrémité (10) et la deuxième paroi d'extrémité (11) étant espacées l'une de l'autre par rapport à la direction longitudinale (9), la première paroi latérale (12) s'étendant à l'extérieur de la deuxième paroi latérale (13) et la première paroi d'extrémité (10), la deuxième paroi d'extrémité (11), la première paroi latérale (12) et la deuxième paroi latérale (13) enfermant ensemble la deuxième section de corps (18).

7. Support de fixation (3) selon la revendication 6, **caractérisé en ce que** la première section de corps (17) a une première résistance mécanique et la deuxième section de corps (18) a une deuxième résistance mécanique, la première résistance mécanique étant supérieure à la deuxième résistance mécanique et/ou la deuxième section de corps (18) étant formée sous la forme d'un treillis (14) et la première section de corps (17) ayant une structure compacte et/ou une densité uniforme.

8. Rampe de carburant, comprenant une galerie principale et au moins un support de fixation (3), **caractérisée en ce que** le support de fixation est un support de fixation (3) selon l'une quelconque des revendications 6 et 7, le support de fixation (3) étant fixé, en particulier par brasage, à la galerie principale de la rampe de carburant.

9. Procédé de fabrication d'une rampe de carburant (1), **caractérisé en ce que** la rampe de carburant (1), en particulier en tant que tout, est produite par fabrication additive et **en ce que** la rampe de carburant (1) est une rampe de carburant (1) selon l'une quelconque des revendications 1 à 8, et **en ce que** le support de fixation (3), en particulier en tant que tout, est produit par fabrication additive et **en ce que** le support de fixation (3) est un support de fixation (3) selon l'une quelconque des revendications 6 et 7.
